# EUROPÄISCHE PATENTSCHRIFT

(11) **EP 1 977 674 B1**
(45) Veröffentlichungstag und Bekanntmachung des Hinweises auf die Patenterteilung: **05.05.2010**
(21) Anmeldenummer: 08005406.7
(22) Anmeldetag: 22.03.2008
(51) Int. Cl.: A47L 25/00

(54) **Mit Bedienungsstift kombinierter Display-Reiniger für Smartphones und ähnliche Geräte**
Display cleaner combined with operation pen for smartphones and similar devices
Nettoyeur d'écran combiné à un stylet de commande pour Smart phones et appareils analogues

(30) Priorität: 03.04.2007 DE 202007005000 U
(43) Veröffentlichungstag der Anmeldung: 08.10.2008
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-U1-202005 004 366
- KR-A- 20030 082 520
- US-A1- 2005 265 771

## Beschreibung

Die Erfindung betrifft ein Display-Reinigungskissen für Smartphones, Minicomputer, nämlich sogenannte PDAs (PDA = Personal Digital Assistant) und ähnliche Geräte, das mit einem Bedienungsstift für die interaktive Kommunikation des Benutzers mit dem Gerät über dessen Bildschirm kombiniert ist.

Smartphones, PDAs, und ähnliche Geräte werden vom Benutzer durch Antasten von Schaltflächen über den Anzeigebildschirm bedient, wobei wegen der Kleinheit des Geräts und seines Bildschirms und somit der Schaltflächen auf dem Bildschirm ein dünner Bedienungsstift ("Stick") verwendet wird. Der Betätigungsstift kann üblicherweise seitlich am Gerät eingesteckt werden und wird dort zum Gebrauch herausgenommen. Da es sich dabei um ein loses Teil handelt, besteht die große Gefahr, dass es verloren geht, z. B. herunterfällt oder nach Gebrauch irgendwo liegen gelassen wird.

Andererseits gehört zum mehr oder weniger obligatorischen Zubehör solcher Geräte ein Reinigungskissen zum Reinigen des Bildschirms, denn dieser bedarf der häufigen Reinigung, um die entsprechend der geringen Gerätegröße kleine Anzeige hinreichend deutlich ablesen zu können. Das Reinigungskissen ist dabei üblicherweise über eine dünne Kordel unverlierbar an einer Öse des Geräts befestigt.

Aus dem Dokument KR-A 2003 0082 520 ist ein solches Reinigungskissen für Geräte wie Smartphones, Kleincomputer und dgl. bekannt, das aus einem Trägerelement aus steifem Material sowie einem daran angeordneten Kissen aus Vliesstoff oder anderem Material besteht und über eine Kordel an einer Öse des Geräts befestigt ist.

Aufgabe der Erfindung ist es, die Handhabung eines Smartphones oder ähnlichen Geräts zu vereinfachen und das Problem der Gefahr des Verlierens des Betätigungsstifts und der dann nicht mehr möglichen Betätigung des Geräts zu bewältigen.

Diese Aufgabe wird erfindungsgemäß durch die im Anspruch 1 angegebene und in den Unteransprüchen weiter ausgestaltete Anordnung gelöst, die aus einer integrierten Konstruktion von Reinigungskissen und Betätigungsstift besteht. Die Oberbegriffsmerkmale des Anspruchs 1 beruhen dabei auf dem Stand der Technik nach der oben erwähnten KR-A 2003 0082 520.

Das Betätigungskissen besteht dabei aus einem steifen Trägerelement, welches ein Vlieskissen aus einem Reinigungsvlies trägt und eine Öse oder dergleichen zur Verbindung mit der Kordel zum Anhängen an das Gerät aufweist sowie eine an dem steifen Trägerelement ausgebildete Spitze aufweist, die als Betätigungsstift dient.

Dies hat den Vorteil, dass das einigermaßen lästige Herausnehmen und Wiedereinstecken des zum Gerät gehörenden Betätigungsstifts entfallen kann, wodurch die Bedienung des Geräts vereinfacht wird, denn der Benutzer nimmt einfach das mittels der Kordel ständig am Gerät hängende Reinigungskissen, das überdies leichter greifbar ist als der übliche Betätigungsstift, und tupft damit mit dessen Spitze die gewünschten Schaltflächen auf dem Gerätebildschirm an.

Die geometrische Form des Reinigungskissens ist dabei gleichgültig. Sinnvollerweise ist die Betätigungsspitze an einer mit Bezug auf die Anbringungsstelle der Kordel am Trägerkörper entgegengesetzt gelegenen Stelle derselben angeordnet.

Einige Ausführungsbeispiele sind in den anliegenden schematischen Zeichnungen dargestellt und werden nachstehend kurz beschrieben.

In den Zeichnungen zeigen:
Die Figuren 1a und 1b in Draufsicht und Seitenansicht eine ovale Ausführungsform eines Reinigungskissens mit Betätigungsspitze, und
die Figuren 2 bis 5 schematisch weitere beispielsweise Ausführungsformen des Reinigungskissens mit Betätigungsspitze, und
Figur 6 eine weitere Ausführungsform des Reinigungskissens mit Betätigungsspitze nach der Erfindung.

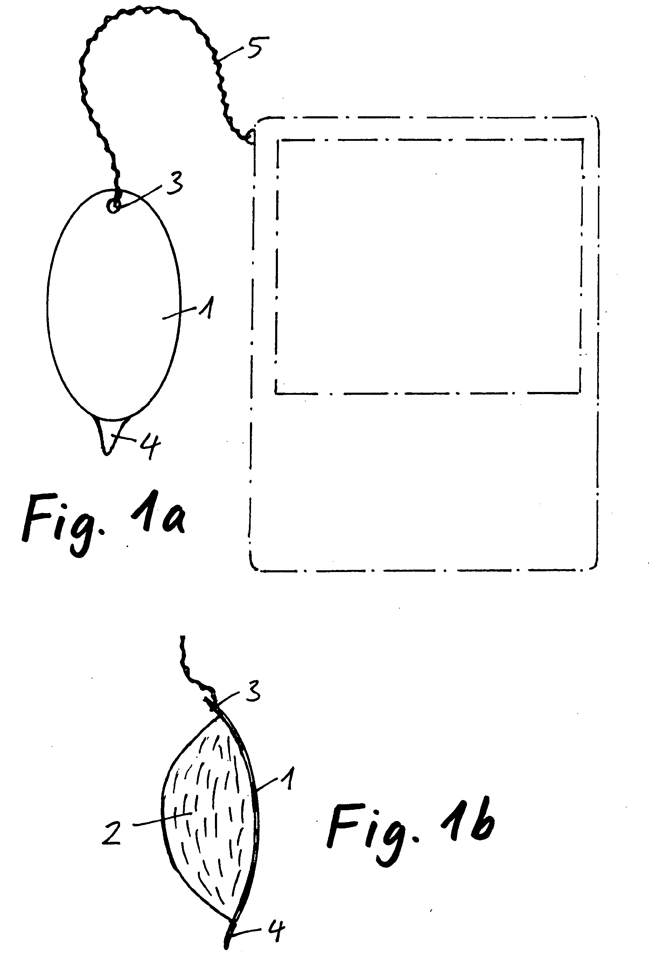

Die Figuren 1a und 1b zeigen ein Reinigungskissen mit integrierter Betätigungs- oder Stiftspitze nach der Erfindung in Draufsicht (Figur 1a) und Seitenansicht (Figur 1b). Es besteht aus einem Trägerelement 1 vorzugsweise aus steifem Kunststoff in Gestalt einer Platte mit leicht gewölbter oder auch ebener Form, an deren einer Seite ein Vlieskissen 2 angebracht, nämlich vorzugsweise angeklebt ist. Das Trägerelement 1, das beim Ausführungsbeispiel nach Figur 1 eine ovale Grundform hat, hat am einen Ende des Ovals eine Öse 3, an welcher eine Kordel 5 zum Anhängen an einer Öse eines nur schematisch gestrichtelt angedeuteten Smartphones oder ähnlichem Geräts befestigt ist, und weist am entgegengesetzten Ende des Ovals eine angeformte Stiftspitze 4 auf, womit das Reinigungskissen als Betätigungsstift zur Bedienung des Geräts benutzt werden kann.

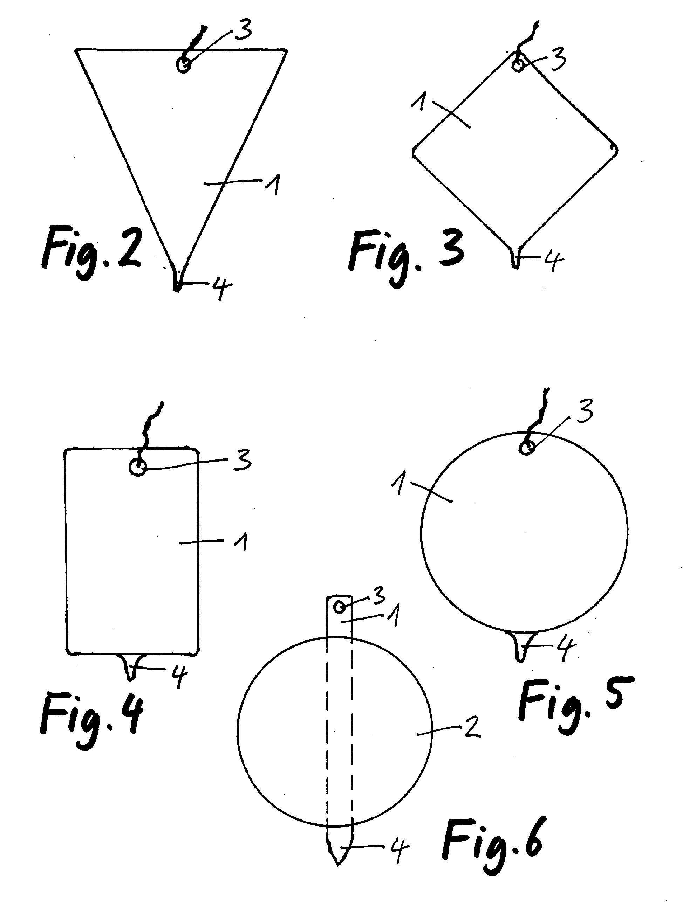

Die Figuren 2 bis 5 zeigen nur schematisch und nur beispielhaft weitere mögliche Ausführungsformen des Reinigungskissens 1, 2 mit Stiftspitze 4, nämlich Figur 2 in Gestalt eines gleichschenkligen Dreiecks, wobei die durch die beiden gleichen Schenkel gebildete Dreieckspitze zur Stiftspitze 4 geformt ist, Figur 3 in Gestalt eines Quadrats oder einer Raute mit an diagonal gegenüber liegenden Ecken angeordneter Öse 3 und Stiftspitze 4, Figur 4 in Gestalt eines Rechtecks mit Anordnung von Öse 3 und Stiftspitze 4 an in beiden Schmalseiten, und Figur 5 in kreisrunder Gestalt mit diametral gegenüber liegender Öse 3 und Stiftspitze 4.

Die geometrische Form ist prinzipiell frei wählbar und es können auch dekorative Formen gewählt werden, z. B. in Gestalt eines Schweinchens oder eines Elefanten, wo der Schwanz die Öse für die Kordel und der Rüssel die Stiftspitze bilden kann.

Figur 6 zeigt eine weitere Ausführungsform, bei welcher das Trägerelement 1 nicht die Form einer Platte hat, sondern eine Stabform, die wiederum in ihren Einzelheiten geometrisch frei wählbar ist, und die im Mittenbereich ihrer Länge ein Vlieskissen 2 trägt, das nach allen Seiten über das Trägerelement 1 überstehen kann, so dass also das Trägerelement durch das Vlieskissen hindurch verläuft, und am einen Ende des Trägerelements kann wiederum eine Öse 3 zum Anbringen einer Kordel gebildet sein, während am entgegengesetzten Ende des Trägerelements die Stiftspitze 4 ausgebildet ist.

Die Befestigung des Reinigungskissens mit Stiftspitze am Gerät über eine Kordel ist nicht zwingend. Es gibt auch Benutzer, die es weniger mögen, wenn das Reinigungskissen am Gerät hängt. Daher umfasst die Erfindung auch Ausführungsformen, die nicht mit einer Kordel oder dergleichen am Gerät angehängt sind und auch nicht notwendigerweise eine Öse zu deren Befestigung haben müssen.

## Patentansprüche

1. Reinigungskissen für Geräte wie Smartphones, Kleincomputer und dgl., bestehend aus einem Trägerelement (1) aus steifem Material und einem daran angeordneten Kissen (2) aus Vliesstoff oder anderem Material,
**gekennzeichnet durch** eine an dem Trägerelement (1) angeformte Stiftspitze (4) zur Betätigung eines interaktiven Bildschirms des Geräts.

2. Reinigungskissen mit Stiftspitze nach Anspruch 1, wobei das Trägerelement (1) an einer von der Stiftspitze (4) entfernten und vorzugsweise entgegengesetzt liegenden Stelle eine Öse (3) zum Anbringen einer Kordel aufweist.

3. Reinigungskissen mit Stiftspitze nach Anspruch 1 oder 2, wobei das Trägerelement (1) als flache oder leicht gewölbte Platte ausgebildet ist, die an einer Plattenseite das Kissen (2) trägt.

4. Reinigungskissen mit Stiftspitze nach Anspruch 3, wobei die Platte eine ovale, kreisrunde, dreieckige, quadratische oder rautenförmige oder rechteckige geometrische Form hat.

5. Reinigungskissen mit Stiftspitze nach Anspruch 4, wobei die Stiftspitze (4) an einem Eck der dreieckigen, quadratischen oder rautenförmigen Platte gebildet ist.

## Claims

1. Cleaning pad for appliances such as smartphones, microcomputers and the like, consisting of a carrier element (1) made of rigid material and a pad (2) which is arranged thereon and made of nonwoven fabric or a different material,
**characterized by** a pen tip (4) which is moulded onto the carrier element (1) for actuating an interactive screen of the appliance.

2. Cleaning pad with pen tip according to claim 1, wherein the carrier element (1) has, at a location remote from and preferably situated opposite the pen tip (4), an eyelet (3) for attaching a cord.

3. Cleaning pad with pen tip according to claim 1 or 2, wherein the carrier element (1) is embodied as a flat or slightly arched plate which carries the pad (2) at a plate side.

4. Cleaning pad with pen tip according to claim 3, wherein the plate has an oval, circular, triangular, square or rhombic or rectangular geometrical shape.

5. Cleaning pad with pen tip according to claim 4, wherein the pen tip (4) is formed at a corner of the triangular, square or rhombic plate.

## Revendications

1. Coussinet de nettoyage pour appareils tels que smartphones, mini-ordinateurs et similaires, comprenant un élément support (1) réalisé dans un matériau rigide et un coussinet (2) disposé dessus, réalisé en non-tissé ou dans un autre matériau,
**caractérisé par** une pointe de stylet (4) formée sur l'élément support (1) et destinée à agir sur un écran interactif de l'appareil.

2. Coussinet de nettoyage avec pointe de stylet selon la revendication 1, l'élément support (1) présentant, à un endroit éloigné de la pointe de stylet (4) et de préférence situé à l'opposé, un oeillet (3) destiné à mettre en place un cordon.

3. Coussinet de nettoyage avec pointe de stylet selon la revendication 1 ou 2, l'élément support (1) étant réalisé sous la forme d'une plaque plane ou légèrement bombée qui porte le coussinet (2) sur une face de la plaque.

4. Coussinet de nettoyage avec pointe de stylet selon la revendication 3, la plaque ayant une forme géométrique ovale, circulaire, triangulaire, carrée ou rhomboïdale ou rectangulaire.

5. Coussinet de nettoyage avec pointe de stylet selon la revendication 4, la pointe de stylet (4) étant formée à un angle de la plaque triangulaire, carrée ou rhomboïdale.
